# FASCICULE DE BREVET EUROPEEN

(11) **EP 4 364 280 B1**
(45) Date de publication et mention de la délivrance du brevet: **19.02.2025**
(21) Numéro de dépôt: 22741165.9
(22) Date de dépôt: 24.06.2022
(51) Int. Cl.: H02K 15/03, H01F 41/02

(54) **PROCEDE DE FABRICATION D'UN ELEMENT A POLES MAGNETIQUES**
VERFAHREN ZUR HERSTELLUNG EINES ELEMENTS MIT MAGNETPOLEN
METHOD FOR MANUFACTURING AN ELEMENT HAVING MAGNETIC POLES

(30) Priorité: 28.06.2021 FR 2106912
(43) Date de publication de la demande: 08.05.2024
(73) Titulaire: Ampere SAS, 92100 Boulogne-Billancourt (FR); Whylot, 46100 Cambes (FR)
(72) Inventeur: KOLEHMAINEN, Jere, 76410 Saint-Aubin-lès-Elbeuf (FR); LAURENT, Thierry, 78720 Cernay la Ville (FR); LOUBEAU, Florian, 78960 Voisins-Le-Bretonneux (FR)
(74) Mandataire: Jacobacci Coralis Harle
(86) Numéro de dépôt international: PCT/EP2022/067419
(87) Numéro de publication internationale: WO 2023/274890

(56) Documents cités:
- EP-A1- 1 065 777
- EP-A1- 1 746 611
- EP-A1- 2 246 864
- EP-A1- 2 453 453
- EP-A1- 3 041 114
- EP-A1- 3 457 535
- EP-A1- 3 929 951
- EP-A2- 2 887 504
- WO-A1-2015/029882
- WO-A1-2020/030241
- WO-A2-2011/000617
- CN-A- 109 921 525
- DE-A1- 102013 211 858
- GB-A- 2 598 007
- JP-A- 2008 140 974

## Description

### DOMAINE TECHNIQUE DE L'INVENTION

La présente invention concerne de manière générale le domaine des machines électriques.

Elle concerne plus particulièrement un procédé de fabrication d'un élément à pôles magnétiques.

L'invention trouve une application particulièrement avantageuse dans la réalisation de moteurs électriques pour véhicules automobiles électriques ou hydrides (voiture, camion, bus...). Elle s'applique plus généralement aussi à d'autres appareils motorisés, tels que par exemple les ascenseurs, les grues...

### ETAT DE LA TECHNIQUE

Une machine électrique à flux axial comprend généralement au moins un stator et un rotor et un entrefer séparant ces deux types d'éléments dans lequel circule le flux magnétique. Le rotor porte une série de grands aimants permanents, tandis qu'une série de bobines est portée par le stator. Quand les bobines sont alimentées par un courant électrique, le rotor, qui est solidarisé à l'arbre de sortie du moteur, est soumis à un couple résultant du champ magnétique (le flux magnétique créé étant un flux axial).

Pour réduire les pertes énergétiques par courants de Foucault dans le rotor, et ainsi augmenter les performances de la machine électrique, les grands aimants permanents peuvent être remplacés par des « éléments à pôles magnétiques » comportant chacun une pluralité d'aimants unitaires de tailles réduites. En effet, un grand aimant permanent est sujet à des pertes par courants de Foucault plus importantes que son équivalent en petits aimants unitaires.

Les aimants unitaires sont agencés de façon serrée pour maximiser le volume de matériau magnétique par rapport au volume de l'élément à pôles magnétiques correspondant et ainsi améliorer les performances de la machine électrique.

On connait par exemple du document FR3064422 une structure comprenant des aimants unitaires de petites tailles. Ces aimants unitaires présentent l'avantage de pouvoir former un réseau serré tout en présentant un fort champ magnétique. Dans ce document, les aimants unitaires sont maintenus les uns par rapport aux autres, par exemple au moyen d'un maillage de tenu (typiquement en forme de nid d'abeille lorsque les aimants unitaires sont hexagonaux), puis enrobés d'une résine pour former l'élément à pôles magnétiques.

Remplir le volume de l'élément à pôles magnétiques avec le maximum d'aimants unitaires en limitant les coûts de fabrication s'avère malgré tout complexe. En effet, chaque aimant unitaire doit être manipulé individuellement. De plus, les éléments à pôles magnétiques présentent généralement deux bords de formes rectilignes mais non parallèles. Agencer des aimants unitaires de formes identiques génère alors nécessairement des espaces vides, comblés par la résine, ce qui diminue l'efficacité magnétique de l'élément à pôles magnétiques et donc du rotor.

### PRESENTATION DE L'INVENTION

Afin de remédier aux inconvénients précités de l'état de la technique, on propose selon l'invention un procédé de fabrication d'un élément à pôles magnétiques pour un rotor pour machine électrique, ledit élément à pôles magnétiques comprenant une pluralité d'aimants unitaires, ledit procédé comprenant les étapes suivantes :
- la fourniture d'un bloc d'aimantation comprenant une première face principale et une seconde face principale opposée à la première face principale, la première face principale et la seconde face principale délimitant entre elles une épaisseur du bloc d'aimantation ;
- l'usinage, sur une partie seulement de l'épaisseur du bloc d'aimantation, d'un premier ensemble de rainures initiales à partir de la première face principale, de telle sorte que le bloc d'aimantation reste d'un seul tenant ;
- le coulage d'un premier matériau de liaison dans les rainures initiales ; puis
- l'usinage d'un ensemble de rainures complémentaires formant des prolongements des rainures initiales du premier ensemble sur toute l'épaisseur du bloc d'aimantation, de manière à former la pluralité d'aimants unitaires séparés les uns des autres, les aimants unitaires étant maintenus solidaires par le premier matériau de liaison.

Ainsi, grâce à l'invention, les aimants unitaires sont solidarisés durant tout le processus de fabrication de l'élément à pôles magnétiques. Il n'est donc pas nécessaire de les manipuler individuellement pour les arranger selon la forme de l'élément à pôles magnétiques.

Le premier matériau de liaison rend quant à lui la structure intermédiaire (avant de réaliser les rainures complémentaires) résistante. Cela permet de la manipuler, par exemple dans une chaine d'usinage, en réduisant les risques de cassure. Avec deux étapes distinctes de coulage d'un matériau de liaison, la probabilité d'une mauvaise pénétration du matériau de liaison à un endroit donné est aussi réduite. La résistance de l'élément à pôles magnétiques est donc augmentée.

De plus, les aimants unitaires sont découpés de manière à remplir au mieux le volume de l'élément à pôles magnétiques. Le procédé de fabrication permet en effet de produire des aimants unitaires de formes différentes de façon à remplir le volume de l'élément à pôles magnétiques (qui est alors égal au volume du bloc d'aimantation moins le volume des rainures) avec le maximum d'aimants unitaires et donc avec le maximum de matériau magnétique.

Enfin, l'invention permet de réduire le gaspillage de matériau magnétique coûteux puisque le minium de matériau est retiré du bloc d'aimantation, à savoir uniquement un volume correspondant aux rainures.
D'autres caractéristiques avantageuses et non limitatives du procédé de fabrication conforme à l'invention, prises individuellement ou selon toutes les combinaisons techniquement possibles, sont les suivantes :
- ledit procédé comprend, avant le coulage du premier matériau de liaison, une étape d'usinage, sur une partie seulement de l'épaisseur du bloc d'aimantation, d'un second ensemble de rainures initiales à partir de la seconde face principale, et dans lequel l'ensemble de rainures complémentaires forme aussi des prolongements des rainures initiales du second ensemble ;
- les rainures initiales du premier ensemble s'étendent selon des premières directions sensiblement parallèles et dans lequel les rainures initiales du second ensemble s'étendent selon des secondes directions sensiblement parallèles, les premières directions étant préférentiellement sensiblement orthogonales aux secondes directions ;
- le premier ensemble comprend des rainures initiales s'étendant selon une direction et des rainures initiales s'étendant selon une autre direction ;
- le premier ensemble de rainures initiales comprend un sous-ensemble de rainures initiales situées en vis-à-vis des rainures initiales du second ensemble ;
- le bloc d'aimantation présente des faces latérales, chaque face latérale étant orthogonale à l'une parmi deux directions latérales orthogonales entre elles, et dans lequel les rainures initiales s'étendent dans des directions sensiblement parallèles à l'une ou l'autre des deux directions latérales ;
- les rainures complémentaires présentent une largeur supérieure à celle des rainures initiales ;
- les rainures complémentaires sont décalées, dans l'épaisseur du bloc d'aimantation, par rapport aux rainures initiales ;
- ledit procédé comprend une étape de coulage d'un second matériau de liaison entre les aimants unitaires, qui est de préférence réalisée après une étape de mise en place de l'élément à pôles magnétiques dans un logement prévu dans le rotor, le second matériau de liaison étant aussi coulé autour de l'élément à pôles magnétiques pour le fixer dans le logement ;
- le premier matériau de liaison et/ou le second matériau de liaison est réalisé dans un matériau comportant une poudre d'aimant mélangée dans une matrice.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un schéma bloc d'une séquence d'étapes permettant la fabrication d'un élément à pôles magnétiques selon l'invention ;
- la figure 2 est une vue schématique en perspective d'un bloc d'aimantation illustrant une seconde étape d'un premier mode de réalisation du procédé de la figure 1 ;
- la figure 3 est une vue schématique en perspective du bloc d'aimantation de la figure 2 illustrant une troisième étape du premier mode de réalisation du procédé ;
- la figure 4 est une vue schématique en perspective du bloc d'aimantation de la figure 2 illustrant une quatrième étape du premier mode de réalisation du procédé ;
- la figure 5 est une vue schématique en perspective du bloc d'aimantation de la figure 2 illustrant une cinquième étape du premier mode de réalisation du procédé ;
- la figure 6 est une vue schématique en perspective d'un bloc d'aimantation illustrant un deuxième mode de réalisation du procédé de la figure 1 ;
- la figure 7 est une vue schématique en perspective d'un bloc d'aimantation illustrant un troisième mode de réalisation du procédé de la figure 1 ;
- la figure 8 est une vue schématique en perspective, par-dessus, d'un bloc d'aimantation illustrant un quatrième mode de réalisation du procédé de la figure 1 ;
- la figure 9 est une vue schématique en perspective, par-dessous, du bloc d'aimantation de la figure 8 ;
- la figure 10 est une vue schématique en perspective d'un bloc d'aimantation illustrant le positionnement de rainures ;
- la figure 11 est une vue schématique en perspective du bloc d'aimantation de la figure 4 situé dans un logement prévu dans un rotor.

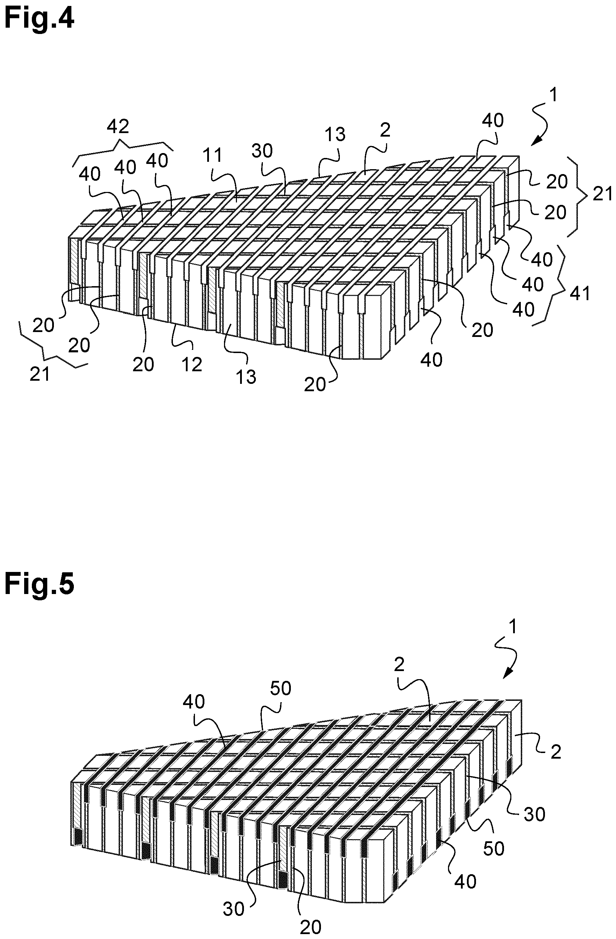

Sur la figure 5, on a représenté un élément à pôles magnétiques 1. L'élément à pôles magnétiques 1 est conçu pour être installé au sein d'un rotor (non représenté) pour machine électrique, ici une machine électrique à flux axial, en l'espèce un moteur permettant de propulser un véhicule électrique.

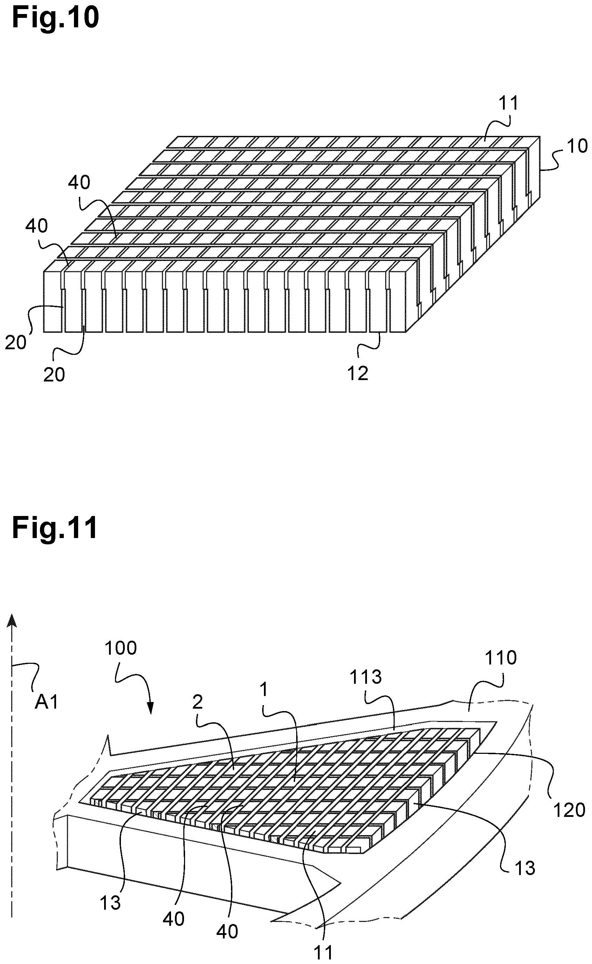

Une telle machine électrique comporte au moins un rotor 100, dont une partie seulement est représentée sur la figure 11, et au moins un stator (non représenté). Dans une machine électrique à flux axial, les stators présentent des formes d'anneaux aplatis et sont équipés, sur leurs faces situées du côté du rotor 100 de dents autours desquelles sont enroulées des bobinages de fils électriquement conducteurs. Lorsque ces bobinages sont alimentés en courant électrique, ils permettent de générer un champ magnétique. Le champ magnétique est axial pour une machine électrique à flux axial.

Le rotor 100 comprend pour sa part un corps 110 de forme annulaire qui loge une pluralité d'éléments à pôles magnétiques 1. Le champ magnétique généré par les bobinages est alors conçu pour agir sur les éléments à pôles magnétiques 1 de manière à faire tourner le rotor 100. Le corps 110 a une forme globale de disque, en ce sens qu'il est sensiblement circonscrit à un cylindre de révolution. Le corps 110 délimite une pluralité de logements en creux 120 (dont un seul est représenté en figure 11), chaque logement 120 comportant un élément à pôles magnétiques 1. Les logements 120 sont répartis régulièrement autour de l'axe de rotation A1 du rotor 100.

Comme le montrent les figures 4 et 5, chaque élément à pôles magnétiques 1 comprend une pluralité d'aimants unitaires 2. Ces aimants unitaires 2 présentent une taille très inférieure à celle l'élément à pôles magnétiques 1 (au moins dix fois inférieure). Ici, par exemple, l'élément à pôles magnétiques 1 comprend environ une centaine d'aimants unitaires 2. Les aimants unitaires 2 présentent ici une forme globalement parallélépipédique.

Au sein de l'élément à pôles magnétiques 1, les aimants unitaires 2 sont séparés les unes des autres. Ici, cela signifie que chaque aimant unitaire 2 est physiquement disjoint des autres aimants unitaires 2 en ce sens qu'il n'est pas en contact direct avec eux. Cette séparation des aimants unitaires permet de limiter les pertes par courant de Foucault au sein de l'élément à pôles magnétiques 1 lorsque la machine électrique est en fonctionnement. A l'extrême limite, on entend par séparés les uns des autres que les aimants unitaires peuvent être en contact les uns avec les autres par des lignes de contact, typiquement par leurs arêtes. Les pertes par courant de Foucault sont alors légèrement supérieures mais toujours bien inférieures à celles d'un grand aimant permanent.

Les aimants unitaires 2 peuvent être tout type. Il peut s'agir d'aimants frittés au néodyme, communément appelés aimants NdFeB. Ces aimants sont composés d'un alliage de néodyme, de fer et de bore. En variante, il peut s'agir d'aimant en ferrite, par exemple d'aimants SmCo (en Samarium-Cobalt) ou d'aimants AINiCo (composés principalement d'aluminium, de nickel et de cobalt).

Comme le montre la figure 5, les aimants unitaires 2 sont maintenus solidairement les uns aux autres par un premier matériau de liaison 30 et par un deuxième matériau de liaison 50 possiblement différent du matériau de liaison 30. Ces matériaux de liaison 30, 50 peuvent être des polymères thermodurcissables, tels que des époxys, des silicones, sous toutes formes applicables, exemple sous forme de colle, de résine, de coulée mono-composante ou bi-composante, ou encore des polymères thermoplastiques tels que le Nylon ou le PPS (Polysulfure de phénylène). Les matériaux de liaison 30, 50 peuvent être appliqué par tout procédé connu de l'homme du métier. Ces matériaux de liaison 30, 50 permettent, en plus de fournir un renfort mécanique pour l'élément à pôles magnétiques 1, d'isoler électriquement les aimants unitaires les uns des autres (tout en les solidarisant) et ainsi de réduire les pertes par courants de Foucault.

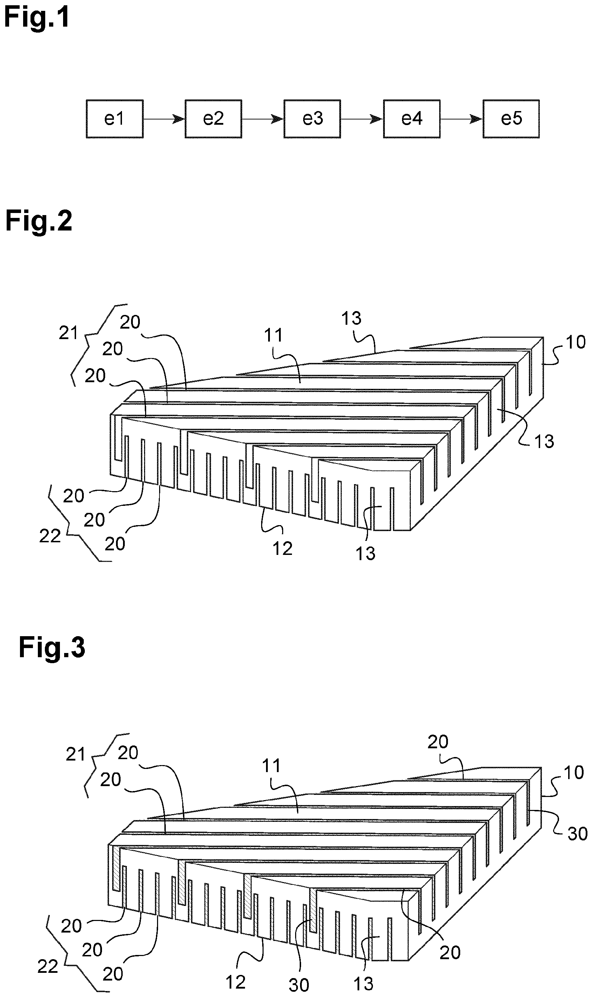

On décrit maintenant le procédé de fabrication de l'élément à pôles magnétiques 1 (procédé qui fait plus particulièrement l'objet de la présente invention) illustré en figure 1 et qui comprend les quatre étapes principales ci-après

Une première étape e1 comprend la fourniture d'un bloc d'aimantation 10. Comme illustré par exemple en figure 2, le bloc d'aimantation 10 présente face supérieure 11, ici appelée face supérieure 11, et une face inférieure 12, ici appelée face inférieure 11, qui opposée à la face supérieure 11. La face supérieure 11 et la face inférieure délimitent entre elles une épaisseur du bloc d'aimantation 10. Le bloc d'aimantation 10 est constitué d'un matériau magnétique. Le matériau magnétique est le même que celui décrit précédemment pour les aimants unitaires 2 puisque ces derniers sont directement et intégralement issus du bloc d'aimantation 10.

La forme du bloc d'aimantation 10 correspond, en négatif, à celle du logement 120 du corps 110 du rotor 100 dans lequel l'élément à pôles magnétiques est destiné à être logé. Les dimensions du bloc d'aimantation 10 sont néanmoins légèrement inférieures à celles du logement 120 pour pouvoir l'y placer. Comme le montre la figure 10, la face supérieure 11 et la face inférieure 12 présentent notamment chacune une forme globalement trapézoïdale similaire à celle du logement 120. L'épaisseur du bloc d'aimantation 10 est quant à elle sensiblement égale à l'épaisseur du corps du rotor 100 (sa dimension selon son axe de rotation A1).

Le bloc d'aimantation 10 obtenu lors de cette première étape e1 est plein, en ce sens qu'il est dépourvu de rainure.

Comme le montre par exemple la figure 2, les deux la face supérieure 11 et la face inférieure 12 du bloc d'aimantation 10 sont parallèles entre elles. L'épaisseur du bloc d'aimantation 10 correspond alors à la distance entre la face supérieure 11 et la face inférieure 12 et est donc constante. L'épaisseur correspond ici à la dimension du bloc d'aimantation 10 s'étendant selon l'axe de rotation A1 du rotor 100.

Outre la face supérieure 11 et la face inférieure 12, le bloc d'aimantation 10 présente des faces latérales 13 reliant la face supérieure 11 à la face inférieure 12. Ici, ces faces latérales 13 sont orthogonales à la face supérieure 11 et à la face inférieure 12. Une fois l'élément à pôles magnétiques fabriqué et installé dans le logement 120, les faces latérales 13 s'étendent en regard du corps 110 du rotor 100. Plus spécifiquement, les faces latérales 13 s'étendent alors en regard d'une surface interne 113 délimitant le logement 120.

Une deuxième étape e2 comprend l'usinage d'un ensemble supérieur 21, ici appelé ensemble supérieur 21, de rainures initiales 20 à partir de la face supérieure 11, sur une partie seulement de l'épaisseur du bloc d'aimantation 10. Ici, cela signifie que la profondeur des rainures initiales 20, c'est-à-dire leur dimension selon une direction sensiblement orthogonale à la face supérieure 11, est, au moins par endroit, strictement inférieure à l'épaisseur du bloc d'aimantation 10. On entend par « à partir de » que les rainures initiales 20 de l'ensemble supérieur 21 débouchent sur la face supérieure 11.

L'usinage des rainures initiales 20 est réalisé de telle sorte que le bloc d'aimantation 10 reste d'un seul tenant. En d'autres termes, aucune des rainures initiales 20 ne vient séparer le bloc d'aimantation 10 en deux parties distinctes. Après cette étape d'usinage e2, le volume formant le bloc d'aimantation 10 est donc continu. A titre d'exemple, la figure 2 représente un bloc d'aimantation 10 après l'usinage des rainures initiales 20. On entend ici par usinage tout procédé permettant d'enlever de la matière du bloc d'aimantation 10, notamment le sciage, le fraisage, le perçage, le tournage, etc.

Une troisième étape e3, illustrée en figure 3, comprend le coulage du premier matériau de liaison 30 dans les rainures initiales 20. Lorsqu'il est coulé, le premier matériau de liaison 30 se trouve dans un état liquide ou au moins visqueux pour venir remplir toutes les rainures usinées. La troisième étape e3 comprend ici une sous-étape de durcissement du premier matériau de liaison 30.

Une quatrième étape e4 comprend l'usinage d'un ensemble de rainures complémentaires 40 formant des prolongements des rainures initiales 20, notamment celles de l'ensemble supérieur 21, sur toute l'épaisseur du bloc d'aimantation 10, de manière à former la pluralité d'aimants unitaires 2. Comme le montre la figure 4, la quatrième étape e4 vise ainsi à étendre, par le truchement des rainures complémentaires 40, les rainures initiales 20 sur toute l'épaisseur du bloc d'aimantation 10. Cette quatrième étape e4 est de préférence réalisée après le durcissement du premier matériau de liaison 30.

En pratique, l'usinage des rainures complémentaires 40 se fait par la face principale qui est opposée à celle à partir de laquelle sont réalisées les rainures initiales 20. Par exemple, l'ensemble supérieur 21 de rainures initiales 20 étant usiné à partir de la face supérieure 11, les rainures complémentaires 40 prolongeant l'ensemble supérieur 21 sont réalisées à partir de la face inférieure 12.

Après l'usinage des rainures complémentaires 40, les aimants unitaires 2 sont donc séparés les uns des autres. Cela signifie que les aimants unitaires 2 ne sont plus reliés les uns aux autres par du matériau magnétique. Ils sont cependant maintenus solidaires par le premier matériau de liaison 30.

De préférence, entre la deuxième étape et la troisième étape, le procédé comprend une étape complémentaire de nettoyage des rainures qui permet de retirer des rainures initiales des résidus de matériau magnétique issus de l'usinage des rainures initiales.

Ce nettoyage est par exemple réalisé en injectant un jet sous pression d'air ou d'une solution de nettoyage, de préférence non-corrosive (sans ou, de préférence, avec tensioactif) dans les rainures initiales 20.

Il est ici prévu une seconde étape de nettoyage après l'usinage des rainures complémentaires 40. De façon remarquable, l'usinage des rainures complémentaires 40 forme une pluralité d'évidements traversant le bloc d'aimantation 10, ce qui facilite son nettoyage.

On décrit maintenant en détail, en référence aux figures 2 à 5, un premier mode de réalisation du procédé de fabrication de l'élément à pôles magnétiques 1.

Dans ce premier mode de réalisation, la deuxième étape e2 comprend, outre l'usinage de l'ensemble supérieur 21 de rainures initiales 20 à partir la face supérieure 11, l'usinage d'un second ensemble 22, ici appelé ensemble inférieur 22, de rainures initiales 20 à partir de la face inférieure 12. En d'autres termes, à cette étape, des rainures sont usinées à partir de la face supérieure 11 et de la face inférieure 12. Comme cela apparait sur la figure 2, les rainures initiales 20 sont ici rectilignes, ce qui facilite leur usinage et leur nettoyage. Les rainures initiales 20 de l'ensemble supérieur 21 s'étendent plus particulièrement selon des premières directions sensiblement parallèles. De même, les rainures initiales 20 de l'ensemble inférieur 22 s'étendent selon des secondes directions sensiblement parallèles.

Les rainures initiales 20 sont régulièrement réparties sur la face supérieure 11 et la face inférieure 12. Sur chacune de ces faces 11, 12, toutes les rainures initiales 20 sont situées à la même distance de sa (ses) rainure(s) initiale(s) 20 adjacente(s). Ici, la distance entre deux rainures initiales 20 adjacentes est la même pour celles de l'ensemble supérieur 21 que pour celles de l'ensemble inférieur 22. L'ensemble supérieur 21 forme ainsi un réseau de rainures initiales 20 rectilignes, parallèles et régulièrement espacées sur la face supérieure 11. Il en est de même pour l'ensemble inférieur 22 sur la face inférieure 12.

En variante, les rainures initiales ne sont pas régulièrement réparties sur la face supérieure. Par exemple, les rainures initiales pourraient être plus espacées au centre du bloc d'aimantation qu'en périphérie. Ainsi, les aimants unitaires situés en périphérie de l'élément à pôles magnétiques seraient plus petits.

Les premières directions, selon lesquelles sont usinées les rainures initiales du premier groupe, sont ici préférentiellement sensiblement orthogonales aux secondes directions. Les aimants unitaires 2 formés sont ainsi des parallélépipèdes rectangles. Cette configuration orthogonale facile l'usinage des rainures, notamment car elle réduit les contraintes sur l'outil d'usinage lors de l'usinage des rainures complémentaires 40 et car elle réduit le risque de fissure et de cassure des aimants unitaires 2 en cours formations. En variantes, les secondes et les premières directions peuvent ne pas être orthogonales. L'usinage dans des directions non-orthogonales est légèrement plus complexe mais permet de réduire les courants de Foucault.

Telles que représentées sur les figures 2 et 3, les rainures initiales 20 s'étendent en profondeur sur environs 75% de l'épaisseur du bloc d'aimantation. De façon générale, les rainures initiales 20 s'étendent en profondeur de 60% à 90% de l'épaisseur du bloc d'aimantation 10. De préférence, les rainures initiales 20 initiales s'étendent sur au moins 50% de l'épaisseur du bloc d'aimantation 10. En longueur, chaque rainure initiale 20 s'étend ici de part en part de la face supérieure 11 ou de la face inférieure 12, c'est-à-dire d'une face latérale 13 à une autre. Cela signifie que chaque rainure initiale 20 s'étend d'un point du périmètre de la face supérieure 11 ou de la face inférieure 12 à un autre point du périmètre de cette même face 11, 12.

Pour obtenir des rainures initiales 20 présentant une largeur (dimension selon une direction orthogonale à l'extension rectiligne et à la profondeur) réduite, c'est-à-dire des rainures initiales 20 fines, les rainures initiales 20 sont ici réalisées au moyen d'une scie à fil. Ainsi, la largeur des rainures initiales 20 est inférieure à 0,3 mm et de préférence inférieure à 0,2 mm. Cela permet de maximiser le volume de matériau magnétique dans l'élément à pôles magnétiques. Ici, toutes les rainures initiales 30 présentent la même largeur. En variantes, les rainures initiales peuvent présenter des largeurs différentes.

La figure 3 illustre le coulage du premier matériau de liaison 30 dans les rainures initiales 20, c'est-à-dire ici à la fois dans celles de l'ensemble supérieur 21 et dans celles de l'ensemble inférieur 22. La viscosité du premier matériau de liaison 30 est ici faible pour pouvoir pénétrer efficacement dans les rainures initiales 20. Comme le montre la figure 3, le premier matériau de liaison 30 remplit ici intégralement les rainures initiales 20.

Une fois le premier matériau de liaison 30 durci, les rainures complémentaires 40 sont usinées. Le résultat de cette quatrième étape e4 est représenté en figure 4.

Comme le montre la figure 4, les rainures complémentaires 40 sont situées en vis-à-vis des rainures initiales 20, c'est-à-dire dans le prolongement de celles-ci. Les rainures complémentaires 40 forment ainsi un réseau de rainures rectilignes, parallèles et régulièrement espacées tant sur la face supérieure 11 que sur la face inférieure 12.

Les rainures complémentaires 40 correspondent ici à un prolongement des rainures initiales 20 sur toute l'épaisseur du bloc d'aimantation 10. Ainsi, chaque paire formée d'une rainure initiale 20 et d'une rainure complémentaire 40 située en vis-à-vis de cette dernière forme un évidement traversant le bloc d'aimantation 10 sur toute l'épaisseur et d'une face latérale 13 à une autre. L'usinage des rainures complémentaires 40 résulte donc dans la formation de la pluralité d'aimants unitaires 2 séparés les uns des autres. L'élément à pôles magnétiques 1 est alors formé. Il comprend la pluralité d'aimants unitaires 2 et le premier matériau de liaison 30 solidarisant les aimants unitaires 2.

Dans ce mode de réalisation, chaque rainure complémentaire 40 est centrée par rapport à la rainure initiale 20 avec laquelle elle est en vis-à-vis. Le réseau de rainures complémentaires 40 est ainsi aligné avec le réseau de rainures initiales 20.

On observe sur la figure 4 que les rainures complémentaires 40 sont réparties entre un premier groupe 41 de rainures complémentaires 40 et un second groupe 42 de rainures complémentaires 40. Les rainures complémentaires 40 du premier groupe 41 prolongent les rainures initiales 20 de l'ensemble supérieur 21. Réciproquement, les rainures complémentaires 40 du second groupe 42 prolongent les rainures initiales 20 de l'ensemble inférieur 22.

Les rainures complémentaires 40 du premier groupe 41 sont ici usinées à partir de la face inférieure 12. Réciproquement, les rainures complémentaires 40 du second groupe 42 sont ici usinées à partir de la face supérieure 11.

Comme cela apparait sur la figure 4, des volumes remplis par le premier matériau de liaison 30 sont usinées. Pour limiter l'engorgement de l'outil d'usinage par le premier matériau de liaison 30, l'usinage des rainures complémentaires 40 est ici réalisé par une scie à lame.

Les rainures complémentaires 40 peuvent aussi être usinées par découpe laser. La découpe laser est particulièrement intéressante lorsque l'épaisseur restante à découper est faible (c'est-à-dire lorsque les rainures initiales 20 s'étendent sur une partie importante de l'épaisseur du bloc d'aimantation 10) par exemple lorsque les rainures complémentaires 40 s'étendant sur une épaisseur inférieure à 0,5 mm. La découpe laser peut aussi être utilisée pour les rainures initiales 20.

Les rainures complémentaires 40 présentent de préférence une largeur supérieure à celle des rainures initiales 20. Ici, les rainures complémentaires 40 présentent toute la même largeur qui est par exemple inférieure à 0,8 mm et de préférence inférieure à 0,5 mm. En variante, les rainures complémentaires pourraient présenter une largeur inférieure à celle des rainures initiales, en particulier dans le cas où les rainures complémentaires sont réalisées par découpe laser. De façon générale, il est en effet plus simple de réaliser des rainures complémentaires fines que des rainures initiales fines. Dans tous les modes de réalisation (mais illustré uniquement dans ce premier mode), le procédé comprend aussi une étape e5 de coulage du second matériau de liaison 50. Comme illustré en figure 5, le second matériau de liaison 50 est coulé dans les rainures complémentaires 40. Le second matériau de liaison 50 permet de solidifier l'élément à pôles magnétiques 1.

En pratique, le coulage du second matériau de liaison 50 est de préférence réalisé lorsque l'élément à pôles magnétiques 1 est positionné dans le logement 120 du corps 110 du rotor 100 prévu à cet effet (comme c'est le cas sur la figure 11). Ainsi, le second matériau de liaison 50 peut être coulé à la fois dans les rainures complémentaires 40 et autour de l'élément à pôles magnétiques 1 pour fixer ce dernier par rapport au corps. Le second matériau de liaison 50 est alors plus spécifiquement coulé en périphérie des faces latérales 13, entre ces dernières et la surface interne 113 du logement 120. En variante, le second matériau de liaison est coulé uniquement dans les rainures complémentaires, par exemple en plaçant l'élément à pôles magnétiques dans un moule.

Ici, le second matériau de liaison 50 comprend une matrice dans laquelle est mélangée une poudre d'aimant. Ainsi, une grande majorité du volume du logement 120 est rempli par un matériau présentant des propriétés magnétiques (l'élément à pôle magnétique 1 ou le second matériau de liaison 50) ce qui permet d'améliorer les performances magnétiques du rotor. L'utilisation d'une poudre d'aimant permet notamment de créer une zone de magnétisme intermédiaire entre une zone non magnétique (le corps) et une zone fortement magnétique (l'élément à pôles magnétique), ce qui contribue à réduire les pertes. Enfin, l'élément à pôles magnétiques 1 lui-même comprend plus de matériau présentant des propriétés magnétiques.

La matrice est par exemple réalisée dans l'un des matériaux de liaison présentés précédemment. Pour améliorer l'adhésion entre le premier et le second matériau de liaison, la matrice est de référence réalisée dans le même matériau que le premier matériau de liaison 30.

La poudre d'aimant est formée de cristaux, par exemple de formes sphériques. La teneur de poudre magnétique en volume dans le matériau polymère est de préférence comprise entre 50 et 85 %. Le diamètre des grains dans la poudre d'aimant est de préférence compris entre 2 et 100 micromètres (µm). Elle est notamment comprise entre 80 et 100 µm en cas de moulage par injection.

La poudre d'aimant rend le second matériau de liaison 50 plus visqueux (que la matrice elle-même) lors de son coulage. Cependant, le fait que les rainures complémentaires 40 soient plus larges que les rainures initiales 20 facilite la pénétration du second matériau de liaison 50 entre les rainures complémentaires 40. En variante de ce premier mode de réalisation, le premier matériau de liaison peut aussi comprendre une poudre d'aimant. Encore en variante, le second matériau de liaison peut ne pas comprendre de poudre d'aimant.

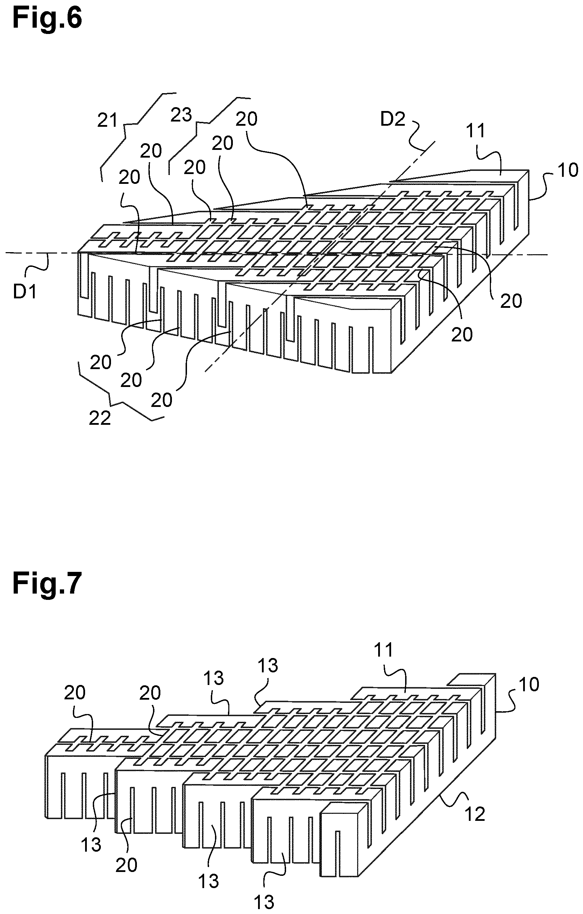

Un deuxième mode de réalisation est illustré en figure 6. La figure 6 illustre plus particulièrement la deuxième étape e2 du procédé. Il se différencie du premier mode de réalisation en ce que l'ensemble supérieur 21 comprend, outres des rainures initiales 20 s'étendant selon une direction, des rainures initiales 20 s'étendant selon une autre direction (toujours à partir de la face supérieure 11).

L'idée est ici d'anticiper la quatrième étape e4 en usinant d'avantage de rainures initiales 20 lors de la deuxième étape e2. Cela permet notamment, lors de la quatrième étape e4, d'usiner un volume plus limité de premier matériau de liaison 30. Cela permet aussi de rendre l'élément à pôles magnétiques plus résistant une fois la quatrième étape e4 terminée puisque les rainures complémentaires 40 occupent un volume plus restreint.

Comme le montre la figure 6, l'ensemble supérieur 21 comprend plus spécifiquement des rainures initiales 20 s'étendant selon une direction de référence D1 et des rainures initiales 20 s'étendant selon une direction perpendiculaire D2 à cette direction de référence D1. Les rainures initiales 20 s'étendant selon cette direction perpendiculaire D2, consistent en un sous-ensemble 23, compris dans l'ensemble supérieur 21, de rainures initiales 20.

Les rainures initiales 20 du sous-ensemble 23 sont ici situées en vis-à-vis des rainures initiales 20 de l'ensemble inférieur 22. De préférence, les rainures initiales 20 du sous-ensemble 23 sont jointives avec les rainures initiales 20 de l'ensemble inférieur 22. Cela signifie que la paire formée par une rainure initiale 20 du sous-ensemble 23 et une rainures initiales 20 de l'ensemble inférieur 22 constitue une ouverture continue sur toute l'épaisseur du bloc d'aimantation 10, c'est-à-dire de la face supérieure 11 à la face inférieure 12 (mais sans séparer le bloc d'aimantation en deux).

Les rainures initiales 20 du sous-ensemble 23 s'étendent dans une zone de la face supérieure 11 circonscrite à l'intérieur du périmètre de la face supérieure 11. En d'autres termes, les rainures initiales 20 du sous-ensemble 23 ne débouchent pas sur les faces latérales 13.

Dans un troisième mode réalisation, illustré en figure 7, les faces latérales 13 sont planes et agencées orthogonalement les unes aux autres le long de la périphérie de la face supérieure 11 et de la face inférieure 12.

Comme le montre la figure 7 (qui illustre plus particulièrement la deuxième étape e2 du procédé) les rainures initiales 20 s'étendent soit parallèlement soit orthogonalement aux faces latérales 13. Cela signifie que chaque rainure initiale 20 s'étend parallèlement à certaines des faces latérales 13 et orthogonalement aux autres faces latérales 13.

Ainsi, dans ce troisième mode de réalisation, tous les aimants unitaires 2 sont sensiblement identiques et présentent une forme de parallélépipède rectangle. Ceci rend l'élément à pôles magnétiques 1 plus solide que celui du premier et du deuxième mode de réalisation représenté aux figures 2 à 6. En effet, par rapport à ces deux modes, l'élément à pôles magnétiques 1 ne comprend pas ici de fins aimants unitaires 2 de forme pyramidale au niveau des faces latérales 13. Ces aimants unitaires 2 en question sont plus fragiles et donc plus susceptibles de se détacher de l'élément à pôles magnétiques 1 lors de sa fabrication ou de son transport.

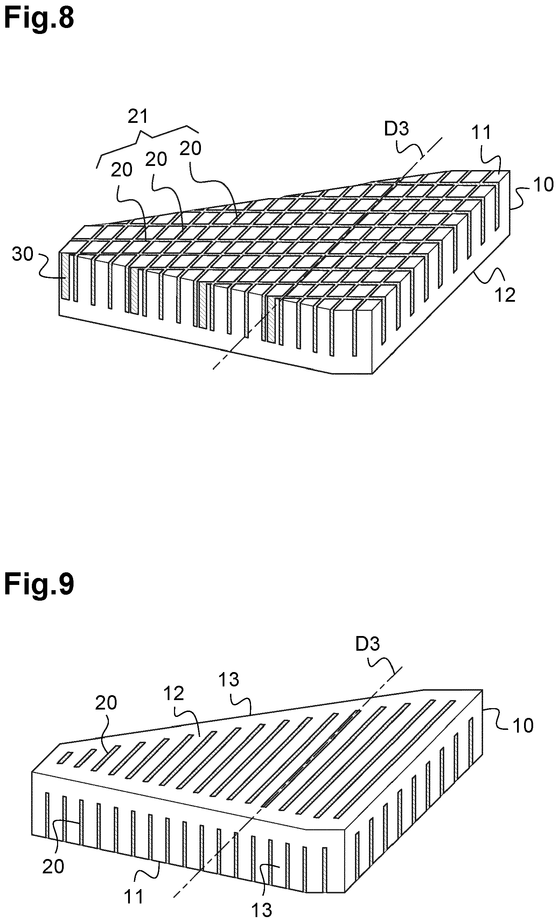

Dans un quatrième mode de réalisation, illustré en figures 8 et 9 (qui représentent le recto et le verso du même élément à pôles magnétiques), toutes les rainures initiales 20 sont usinées à partir de la face supérieure 11Ainsi, à la deuxième étape e2, seul l'ensemble supérieur 21 de rainures initiales 20 est réalisé. Dans l'exemple illustré en figure 8, l'ensemble supérieur 21 comprend des rainures initiales 20 s'étendant dans une direction de référence et des rainures initiales 20 s'étendant selon une direction perpendiculaire à cette direction de référence.

La particularité de ce quatrième mode de réalisation est que certaines des rainures initiales 20 s'étendent, sur une partie seulement de leur longueur, sur toute l'épaisseur du bloc d'aimantation 10. Cela est particulièrement visible sur la figure 9 qui représente le bloc d'aimantation 10 vu par la face inférieure 12 (à la fin de la troisième étape e3). Ici, dans une zone centrale du bloc d'aimantation 10, toutes les rainures initiales 20 s'étendant selon une direction de latérale D3 s'étendant en profondeur sur toute l'épaisseur du bloc d'aimantation 10. Dans une zone centrale signifie ici que cette extension sur toute l'épaisseur n'est pas réalisée d'une face latérale 13 à une autre de manière à conserver l'unité du bloc d'aimantation 10.

Dans ce quatrième mode de réalisation, les rainures complémentaires 40 sont alors toutes usinées à partir de la face inférieure 12. Ce mode de réalisation simplifie le procédé de fabrication de l'élément à pôles magnétiques 1 puisqu'il n'est pas nécessaire de retourner le bloc d'aimantation 10, ni à la deuxième étape e2 ni à la quatrième étape e4.

La figure 10 illustre une partie un bloc d'aimantation 10 comprenant des rainures initiales 20 et sur lequel est indiquée la position des rainures complémentaires 40 qui seront usinées à la quatrième étape e4. Ici, les rainures complémentaires 40 sont décalées, dans l'épaisseur du bloc d'aimantation 10, par rapport aux rainures initiales 20. On entend par « décalée » que chaque rainure complémentaire 40 est décentrée par rapport à sa rainure initiale 20 associée. Ainsi, par exemple, sur la figure 10, chaque rainure complémentaire 40 est en contact avec la rainure initiale 20 en vis-à-vis au niveau d'une arête rectiligne.

La présente invention n'est nullement limitée aux modes de réalisation décrits et représentés, mais l'homme du métier saura y apporter toute variante conforme à l'invention. Notamment, l'invention est applicable à des éléments à pôles magnétiques parallélépipédiques, par exemple en forme de parallélépipède rectangle comme en figure 10. L'invention est également applicable aux machines à flux radial comportant un rotor à aimants permanents. Dans ce cas, les faces inférieures et supérieures sont de préférence courbées autour de l'axe de rotation du rotor.

## Revendications

1. Procédé de fabrication d'un élément à pôles magnétiques (1) pour un rotor pour machine électrique, ledit élément à pôles magnétiques (1) comprenant une pluralité d'aimants unitaires (2), ledit procédé comprenant les étapes suivantes :
- la fourniture (e1) d'un bloc d'aimantation (10) comprenant une première face principale (11) et une seconde face principale (12) opposée à la première face principale (11), la première face principale (11) et la seconde face principale (12) délimitant entre elles une épaisseur du bloc d'aimantation (10) ;
- l'usinage (e2), sur une partie seulement de l'épaisseur du bloc d'aimantation (10), d'un premier ensemble (21) de rainures initiales (20) à partir de la première face principale (11), de telle sorte que le bloc d'aimantation (10) reste d'un seul tenant ;
- le coulage (e3) d'un premier matériau de liaison (30) dans les rainures initiales (20) ; **caractérisé en ce qu'**il comprend en outre
- l'usinage (e4) d'un ensemble de rainures complémentaires (40) formant des prolongements des rainures initiales (20) du premier ensemble (21) sur toute l'épaisseur du bloc d'aimantation (10), de manière à former la pluralité d'aimants unitaires (2) séparés les uns des autres, les aimants unitaires (2) étant maintenus solidaires par le premier matériau de liaison (30).

2. Procédé selon la revendication 1, ledit procédé comprenant, avant le coulage du premier matériau de liaison (30), une étape d'usinage, sur une partie seulement de l'épaisseur du bloc d'aimantation (10), d'un second ensemble (22) de rainures initiales (20) à partir de la seconde face (12) principale, et dans lequel l'ensemble de rainures complémentaires (40) forme aussi des prolongements des rainures initiales (20) du second ensemble (22).

3. Procédé selon la revendication 2, dans lequel les rainures initiales (20) du premier ensemble (21) s'étendent selon des premières directions sensiblement parallèles et dans lequel les rainures initiales (20) du second ensemble (22) s'étendent selon des secondes directions sensiblement parallèles, les premières directions étant préférentiellement sensiblement orthogonales aux secondes directions.

4. Procédé selon l'une des revendications 1 à 3, dans lequel le premier ensemble (21) comprend des rainures initiales (20) s'étendant selon une direction (D1) et des rainures initiales (20) s'étendant selon une autre direction (D2).

5. Procédé selon l'une des revendications 2 à 4, dans lequel le premier ensemble (21) de rainures initiales (20) comprend un sous-ensemble (23) de rainures initiales (20) situées en vis-à-vis des rainures initiales (20) du second ensemble (22).

6. Procédé selon l'une des revendications 1 à 5, dans lequel le bloc d'aimantation (10) présente des faces latérales (13), chaque face latérale (13) étant orthogonale à l'une parmi deux directions latérales orthogonales entre elles, et dans lequel les rainures initiales (20) s'étendent dans des directions sensiblement parallèles à l'une ou l'autre des deux directions latérales.

7. Procédé selon l'une des revendications 1 à 6, dans lequel les rainures complémentaires (40) présentent une largeur supérieure à celle des rainures initiales (20).

8. Procédé selon l'une des revendications 1 à 7, dans lequel les rainures complémentaires (40) sont décalées, dans l'épaisseur du bloc d'aimantation (10), par rapport aux rainures initiales (30).

9. Procédé selon l'une des revendications 1 à 8, ledit procédé comprenant une étape de coulage (e5) d'un second matériau de liaison (50) entre les aimants unitaires (2), qui est de préférence réalisée après une étape de mise en place de l'élément à pôles magnétiques (1) dans un logement (120) prévu dans le rotor (100), le second matériau de liaison (50) étant aussi coulé autour de l'élément à pôles magnétiques (1) pour le fixer dans le logement (120).

10. Procédé selon la revendication 9, dans lequel le premier matériau de liaison (30) et/ou le second matériau de liaison (50) est réalisé dans un matériau comportant une poudre d'aimant mélangée dans une matrice.

## Patentansprüche

1. Verfahren zur Herstellung eines Elements mit Magnetpolen (1) für einen Rotor für eine elektrische Maschine, wobei das Element mit Magnetpolen (1) eine Vielzahl von einzelnen Magneten (2) umfasst, wobei das Verfahren die folgenden Schritte umfasst:
- Bereitstellen (e1) eines Magnetisierungsblocks (10), der eine erste Hauptseite (11) und eine zweite Hauptseite (12) gegenüber der ersten Hauptseite (11) umfasst, wobei die erste Hauptseite (11) und die zweite Hauptseite (12) zwischen sich eine Dicke des Magnetisierungsblocks (10) begrenzen;
- Fräsen (e2) nur auf einem Teil der Dicke des Magnetisierungsblocks (10) einer ersten Einheit (21) ursprünglicher Rillen (20) aus der ersten Hauptseite (11), sodass der Magnetisierungsblock (10) in einem Stück verbleibt;
- Gießen (e3) eines ersten Bindungswerkstoffs (30) in die ursprünglichen Rillen (20);
**dadurch gekennzeichnet, dass** es weiter umfasst
- Fräsen (e4) einer Einheit ergänzender Rillen (40), die Verlängerungen der ursprünglichen Rillen (20) der ersten Einheit (21) bilden, über die gesamte Dicke des Magnetisierungsblocks (10) um die Vielzahl von voneinander getrennten einzelnen Magneten (2) zu bilden, wobei die einzelnen Magneten (2) durch den Bindungswerkstoff (30) fest verbunden gehalten werden.

2. Verfahren nach Anspruch 1, wobei das Verfahren vor dem Gießen des ersten Bindungswerkstoffs (30) einen Frässchritt nur auf einem Teil der Dicke des Magnetisierungsblocks (10) einer zweiten Einheit (22) ursprünglicher Rillen (20) aus der zweiten Hauptseite (12) umfasst, und wobei die Einheit ergänzender Rillen (40) auch Verlängerungen der ursprünglichen Rillen (20) der zweiten Einheit (22) bildet.

3. Verfahren nach Anspruch 2, wobei sich die ursprünglichen Rillen (20) der ersten Einheit (21) entlang erster im Wesentlichen paralleler Richtungen erstrecken, und wobei sich die ursprünglichen Rillen (20) der zweiten Einheit (22) entlang zweiter im Wesentlichen paralleler Richtungen erstrecken, wobei die ersten Richtungen vorzugsweise im Wesentlichen orthogonal zu den zweiten Richtungen verlaufen.

4. Verfahren nach einem der Ansprüche 1 bis 3, wobei die erste Einheit (21) ursprüngliche Rillen (20) umfasst, die sich in einer Richtung (D1) erstrecken, und ursprüngliche Rillen (20), die sich in einer anderen Richtung (D2) erstrecken.

5. Verfahren nach einem der Ansprüche 2 bis 4, wobei die erste Einheit (21) ursprünglicher Rillen (20) eine Untereinheit (23) ursprünglicher Rillen (20) umfasst, die sich gegenüber den ursprünglichen Rillen (20) der zweiten Einheit (22) befinden.

6. Verfahren nach einem der Ansprüche 1 bis 5, wobei der Magnetisierungsblock (10) laterale Seiten (13) aufweist, wobei jede laterale Seite (13) orthogonal zu einer aus zwei zueinander orthogonalen lateralen Richtungen ist, und wobei sich die ursprünglichen Rillen (20) in im Wesentlichen parallelen Richtungen zur einen oder der anderen der beiden lateralen Richtungen erstrecken.

7. Verfahren nach einem der Ansprüche 1 bis 6, wobei die ergänzenden Rillen (40) eine größere Breite als jene der ursprünglichen Rillen (20) aufweisen.

8. Verfahren nach einem der Ansprüche 1 bis 7, wobei die ergänzenden Rillen (40) in der Dicke des Magnetisierungsblocks (10) in Bezug auf die ursprünglichen Rillen (30) versetzt sind.

9. Verfahren nach einem der Ansprüche 1 bis 8, wobei das Verfahren einen Schritt des Gießens (e5) eines zweiten Bindungswerkstoffs (50) zwischen den einzelnen Magneten (2) umfasst, der vorzugsweise nach einem Schritt des Anbringens des Elements mit Magnetpolen (1) in einer Aufnahme (120) durchgeführt wird, die in dem Rotor (100) vorgesehen ist, wobei der zweite Bindungswerkstoff (50) auch um das Element mit Magnetpolen (1) herum gegossen wird, um es in der Aufnahme (120) zu fixieren.

10. Verfahren nach Anspruch 9, wobei der erste Bindungswerkstoff (30) und/oder der zweite Bindungswerkstoff (50) aus einem Werkstoff realisiert ist, der ein in einer Matrix gemischtes Magnetpulver beinhaltet.

## Claims

1. Method for manufacturing an element having magnetic poles (1) for a rotor for an electric machine, said element having magnetic poles (1) comprising a plurality of unit magnets (2), said method comprising the steps of:
- providing (e1) a magnetisation block (10) comprising a first main face (11) and a second main face (12) opposite to the first main face (11), the first main face (11) and the second main face (12) delimiting a thickness of the magnetisation block (10) therebetween;
- machining (e2), over only part of the thickness of the magnetisation block (10), a first set (21) of initial slots (20) starting from the first main face (11), such that the magnetisation block (10) remains integral;
- pouring (e3) a first connecting material (30) into the initial slots (20);
**characterized in that** it further comprises machining (e4) a set of complementary slots (40) forming extensions of the initial slots (20) of the first set (21) across the entire thickness of the magnetisation block (10), so as to form the plurality of unit magnets (2) separated from each other, the unit magnets (2) being held secured together by the first connecting material (30).

2. Method according to claim 1, said method comprising, before pouring the first connecting material (30), a step of machining, over only part of the thickness of the magnetisation block (10), a second set (22) of initial slots (20) starting from the second main face (12), and wherein the set of complementary slots (40) also forms extensions of the initial slots (20) of the second set (22).

3. Method according to claim 2, wherein the initial slots (20) of the first set (21) extend according to substantially parallel first directions and wherein the initial slots (20) of the second set (22) extend according to substantially parallel second directions, the first directions preferably being substantially orthogonal to the second directions.

4. Method according to one of claims 1 to 3, wherein the first set (21) comprises initial slots (20) extending according to one direction (D1) and initial slots (20) extending according to another direction (D2).

5. Method according to one of claims 2 to 4, wherein the first set (21) of initial slots (20) comprises a subset (23) of initial slots (20) located opposite the initial slots (20) of the second set (22).

6. Method according to one of claims 1 to 5, wherein the magnetisation block (10) has lateral faces (13), each lateral face (13) being orthogonal to one amongst two lateral directions orthogonal to each other, and wherein the initial slots (20) extend in directions substantially parallel to either one of the two lateral directions.

7. Method according to one of claims 1 to 6, wherein the complementary slots (40) have a width larger than that of the initial slots (20).

8. Method according to one of claims 1 to 7, wherein the complementary slots (40) are offset, across the thickness of the magnetisation block (10), with respect to the initial slots (30).

9. Method according to one of claims 1 to 8, said method comprising a step of pouring (e5) a second connecting material (50) between the unit magnets (2), which is preferably carried out after a step of placing the element having magnetic poles (1) in a compartment (120) provided for in the rotor (100), the second connecting material (50) being also poured around the element having magnetic poles (1) to fasten it in the compartment (120).

10. Method according to claim 9, wherein the first connecting material (30) and/or the second connecting material (50) is made of a material including a magnet powder mixed in a matrix.
